# EUROPÄISCHE PATENTANMELDUNG

(11) **EP 2 723 113 A1**
(43) Veröffentlichungstag der Anmeldung: **23.04.2014**
(21) Anmeldenummer: 13004727.7
(22) Anmeldetag: 30.09.2013
(51) Int. Cl.: H04W 12/06, H04W 8/20, H04W 8/26

(54) **Verfahren zum Betreiben eines Sicherheitsmoduls**

(30) Priorität: 17.10.2012 DE 102012020368
(71) Anmelder: Giesecke & Devrient GmbH, 81677 München (DE)
(72) Erfinder: Rudolph, Jens, 80639 München (DE)

(57) **Zusammenfassung**

Die Erfindung betrifft ein Verfahren zum Betreiben eines Sicherheitsmoduls in einem Mobilfunksystem aufweisend mindestens ein Mobilfunkkommunikationsnetz, wobei das Sicherheitsmodul aktive Teilnehmeridentitätsdaten und inaktive Teilnehmeridentitätsdaten aufweist, wobei eine Kommunikation eines ersten Teilnehmers mit zweiten Teilnehmern über ein durch das Sicherheitsmodul für die Kommunikation am Mobilfunkkommunikationsnetz betriebsfähiges Mobilfunkendgerät unter Verwendung der aktiven Teilnehmeridentitätsdaten ermöglicht wird. Das Verfahren umfasst die Schritte: Aktivieren von inaktiven Teilnehmeridentitätsdaten im Sicherheitsmodul, wodurch eine bis zum Zeitpunkt des Aktivierens aktive Rufnummer der aktiven Teilnehmeridentitätsdaten deaktiviert wird und wodurch eine inaktive Rufnummer eine aktivierte Rufnummer wird; und Bereitstellen der aktivierten Rufnummer einer Anzahl von vorbestimmten zweiten Teilnehmern.

## Beschreibung

Die Erfindung betrifft ein Verfahren zum Betreiben eines Sicherheitsmoduls mit aktiven und inaktiven Teilnehmeridentitätsdaten in einem Mobilfunksystem. Ferner betrifft die Erfindung ein entsprechendes System zum Betreiben eines Sicherheitsmoduls.

Teilnehmeridentitätsdaten dienen dazu, einen Teilnehmer in einem Kommunikationsnetzwerk, beispielsweise einem digitalen Mobilfunknetzwerk, eindeutig zu identifizieren und/oder zu authentisieren. Durch diese Teilnehmeridentitätsdaten ist es einem Betreiber eines Kommunikationsnetzwerks möglich, die Nutzung eines vom Netzbetreiber angebotenen Dienstes, beispielsweise eines Sprach- und/oder Datendienstes, jedem Teilnehmer in dem Kommunikationsnetzwerk eindeutig zuzuordnen. Weiterhin ist es dem Betreiber möglich, einen Netzzugang, also das Einbuchen in das Kommunikationsnetz, zu ermöglichen, sobald eine Authentisierung des Teilnehmers stattgefunden hat, oder den Netzzugang zu verweigern, falls eine Authentisierung des Teilnehmers nicht möglich ist.

Diese Teilnehmeridentitätsdaten befinden sich in einem Sicherheitsmodul, auch als Subscriber Identity Modul (SIM) bezeichnet. Üblicherweise wird jedes Mobilfunkendgerät mit einem Sicherheitsmodul ausgestattet. Die Teilnehmeridentitätsdaten spezifizieren in der Regel eine Rufnummer, über welche der Teilnehmer erreicht werden kann. Das Sicherheitsmodul ist dabei temporär oder dauerhaft einem Mobilfunkgerät zugeordnet, über das der Teilnehmer kommunizieren kann.

Aus dem Stand der Technik ist es bekannt, dass auf einem Sicherheitsmodul mehrere Teilnehmeridentitätsdaten (genauer mehrere Sätze von Teilnehmeridentitätsdaten) mit verschiedenen Rufnummern hinterlegt sind. Die Teilnehmeridentitätsdaten sind dabei aktiv oder inaktiv. Wenn inaktive Teilnehmeridentitätsdaten aktiviert werden, dann werden die bis zu diesem Zeitpunkt aktiven Teilnehmeridentitätsdaten inaktiv. Daher kann immer nur ein Satz von Teilnehmeridentitätsdaten und damit auch nur eine Rufnummer aktiv sein, d.h. der entsprechende Teilnehmer ist nur über die aktive Rufnummer der gerade aktiven Teilnehmeridentitätsdaten erreichbar. Es ist prinzipiell möglich, dass den aktiven Teilnehmeridentitätsdaten auch mehrere Rufnummern zugeordnet sind. Dies ist beispielsweise bei sogenannten "Dual-Line SIM" der Fall. Erfindungsgemäß fallen alle Rufnummern, die mit den Teilnehmeridentitätsdaten aktiv sind, unter den Begriff aktive Rufnummer, auch wenn tatsächlich das Teilnehmeridentitätsmodul unter mehreren Rufnummern der aktiven Teilnehmeridentitätsdaten erreichbar ist.

Im Falle, dass für einen Teilnehmer inaktive Teilnehmeridentitätsdaten auf dem Sicherheitsmodul aktiviert werden, wird auch die zu den Teilnehmeridentitätsdaten zugehörige Rufnummer aktiviert und die bis zum Zeitpunkt der Aktivierung aktive Rufnummer deaktiviert. Da andere Teilnehmer diesen Teilnehmeridentitätsdatenwechsel nicht erkennen, sind sie nicht über die nunmehr aktive Rufnummer informiert, über welche der Teilnehmer zu erreichen ist, und können mit dem die Teilnehmeridentitätsdaten wechselnden Teilnehmer nicht mehr kommunizieren.

Aufgabe der Erfindung ist es, ein Verfahren zu schaffen, bei dem auf einfache Weise die Erreichbarkeit eines Teilnehmers bei einem Teilnehmeridentitätsdatenwechsel gewährleistet ist.

Diese Aufgabe wird durch das Verfahren gemäß Patentanspruch 1 bzw. das System gemäß Patentanspruch 14 gelöst. Weiterbildungen der Erfindung sind in den abhängigen Ansprüchen definiert.

Das erfindungsgemäße Verfahren dient zum Betreiben eines Sicherheitsmoduls in einem Mobilfunksystem, wobei das Mobilfunksystem zumindest ein Mobilfunkkommunikationsnetz aufweist. Das Sicherheitsmodul weist aktive Teilnehmeridentitätsdaten und inaktive Teilnehmeridentitätsdaten auf. Eine Kommunikation eines ersten Teilnehmers mit zweiten Teilnehmern wird über ein durch das Sicherheitsmodul für die Kommunikation am Mobilfunkkommunikationsnetz betriebsfähiges Mobilfunkendgerät unter Verwendung der aktiven Teilnehmeridentitätsdaten ermöglicht. Die zweiten Teilnehmer können analog zum ersten Teilnehmer auch über ein Sicherheitsmodul identifizierbare Teilnehmer eines Mobilfunknetzes sein. Nichtsdestotrotz können zweite Teilnehmer auch andere Arten von Teilnehmern umfassen. Insbesondere kann ein zweiter Teilnehmer auch über eine E-Mail-Adresse oder Festnetznummer identifizierbar sein, ohne dass er zu dem Mobilfunksystem gehört.

Ein Teilnehmer im Sinn der Erfindung ist beispielsweise eine Person, die mittels des Mobilfunkendgeräts auf Dienste des Kommunikationsnetzes zugreifen möchte. Als ein Teilnehmer ist auch ein Endgerät in einer M2M Umgebung zu verstehen.

Teilnehmeridentitätsdaten im Sinn der Erfindung sind zum einen Daten, die einen Teilnehmer eindeutig im Mobilfunksystem und auch in einem speziellen Mobilfunknetz identifizieren, beispielsweise eine International Mobile Subscriber Identity (IMSI) und/ oder teilnehmerspezifische Daten. Die IMSI ist das in einem Mobilfunkkommunikationsnetzwerk eindeutige Teilnehmeridentitätsdatum.

Die Rufnummer, unter der ein erster Teilnehmer für einen zweiten Teilnehmer erreichbar ist, ist mit den Teilnehmeridentitätsdaten verknüpft. Diese Verknüpfung wird durch das Kommunikationsnetzwerk vorgenommen und ist zumeist eine Auflösung der gewählten Rufnummer zu einer Teilnehmeridentitätskennung, insbesondere der IMSI und der Authentisierungsalgorithmen. Somit wählt ein zweiter Teilnehmer eine Rufnummer, die Auflösung des zugehörigen Teilnehmeridentitätsmoduls übernimmt eine Instanz des Kommunikationsnetzes.

Die Rufnummer wird aktiviert, wenn die Teilnehmeridentitätsdaten aktiviert werden, wohingegen alle übrigen Rufnummern der auf dem Sicherheitsmodul befindlichen Teilnehmeridentitätsdaten inaktiv sind. Ein Teilnehmer ist nur unter der aktiven Rufnummer der aktivierten Teilnehmeridentitätsdaten erreichbar. Über inaktive Rufnummern kann der Teilnehmer nicht durch andere Teilnehmer kontaktiert werden, eine entsprechende netzwerkseitige Auflösung erfolgt demnach nicht. Der Begriff der Rufnummer ist dabei weit zu verstehen und kann eine beliebige Kennzeichnung umfassen, mit der ein Teilnehmer in dem Mobilfunksystem kontaktiert werden kann. In einer besonders bevorzugten Ausführungsform ist die Rufnummer die an sich bekannte MSISDN-Nummer (MSISDN = Mobile Subscriber Integrated Services Digital Network Number).

Darüber hinaus dienen Teilnehmeridentitätsdaten dazu, einen Teilnehmer eindeutig gegenüber dem Mobilfunkkommunikationsnetz zu authentisieren. Hierzu werden auf das Sicherheitsmodul bzw. Teilnehmeridentitätsmodul beispielsweise ein Authentisierungsalgorithmus, spezifische Algorithmusparameter, ein kryptografischer Authentisierungsschlüssel und/ oder ein kryptografischer Over-The-Air (OTA) Schlüssel aufgebracht.

Die Anzahl der Sätze von Teilnehmeridentitätsdaten auf dem Teilnehmeridentitätsmodul ist nicht beschränkt. Es ist angedacht, in Zukunft auf einem Teilnehmeridentitätsmodul dreißig oder mehr Sätze von Teilnehmeridentitätsdaten vorzusehen.

Bei einem Mobilfunkendgerät im Sinn der Erfindung handelt es sich prinzipiell um ein Gerät oder eine Gerätekomponente, welches Mittel zur Kommunikation mit einem Mobilfunkkommunikationsnetz aufweist, um Dienste dieses Kommunikationsnetzes nutzen zu können. Beispielsweise kann ein mobiles Endgerät als ein Mobiltelefon, ein Smart-Phone, ein Tablet-PC, ein Notebook, ein PDA ausgestaltet sein. Unter einem mobilen Endgerät können aber auch Multimediaendgeräte wie digitale Bilderrahmen, Audiogeräte, Fernsehgeräte, E-Book-Reader, Set-Top Boxen, Digitalkameras verstanden werden, die ebenfalls Mittel zur Kommunikation mit dem Kommunikationsnetzwerk aufweisen. Ferner umfasst der Begriff mobile Endgeräte auch jegliche Arten von Maschinen, Automaten, Fahrzeugen und Einrichtungen, die Mittel, insbesondere Mobilfunkmodems, zur Kommunikation mit dem Kommunikationsnetzwerk aufweisen.

Bei einem Sicherheitsmodul im Sinne der Erfindung handelt es sich um ein in Baugröße und Ressourcenumfang reduziertes Modul, welches einen Mikrocontroller und mindestens eine Datenschnittstelle zur Kommunikation mit einem Endgerät aufweist. Dieses Sicherheitsmodul, auch Teilnehmeridentitätsmodul genannt, weist einen Speicherbereich auf, indem die Teilnehmeridentitätsdaten sicher eingebracht sind, um Manipulations- und/oder Missbrauchsversuche bei der Identifizierung und/ oder Authentisierung am Kommunikationsnetzwerk zu verhindern. Einerseits ist das Teilnehmeridentitätsmodul mittels des Endgeräts betriebsfähig. Andererseits ist das Endgerät auch nur durch das Teilnehmeridentitätsmodul zur Verwendung am Kommunikationsnetzwerk betriebsfähig.

Bei dem Teilnehmeridentitätsmodul handelt es sich beispielsweise um eine Chipkarte, auch UICC oder umgangssprachlich SIM-Karte, in einem mobilen Kommunikationssystem mit auf einem Chip gespeicherten maschinenlesbaren Teilnehmeridentitätsdaten des Teilnehmers. Derartige Teilnehmeridentitätsmodule werden mittels Kartenleseeinheiten in einem Endgerät betrieben und sind insbesondere dafür vorgesehen, aus dem Endgerät zum Zweck eines Austauschs oder der Verwendung in einem zweiten Endgerät entnommen werden zu können.

Alternativ handelt es sich bei dem Teilnehmeridentitätsmodul um einen integralen Bestandteil des mobilen Endgeräts, beispielsweise einen fest verdrahteten elektronischen Baustein. Derartige Teilnehmeridentitätsmodule werden auch als embedded UICC (eUICC) bezeichnet. In dieser Bauform sind diese Teilnehmeridentitätsmodule nicht für eine Entnahme aus dem Endgerät vorgesehen und können prinzipiell nicht einfach ausgetauscht werden. Derartige Teilnehmeridentitätsmodule können auch als embedded Secure Elements, also als eine sichere Hardwarekomponente im Endgerät ausgestaltet sein.

Alternativ kann ein Teilnehmeridentitätsmodul integraler Bestandteil eines Machine-to-Machine-, kurz M2M-, Moduls sein. Diese Module dienen der Fernüberwachung, -kontrolle und -wartung von Endgeräten wie Maschinen, Anlagen und Systemen mittels des Kommunikationssystems. Sie können alternativ auch für Zähleinheiten wie Stromzähler, Warmwasserzähler oder dergleichen verwendet werden.

Alternativ ist das Teilnehmeridentitätsmodul als eine Kombination aus Hard- und Softwarekomponenten in einem vertrauenswürdigen Teil eines Betriebssystems, einer sogenannten Trusted Execution Environment (TEE) des Endgerätes ausgebildet. Das Teilnehmeridentitätsmodul ist dann beispielsweise innerhalb einer gesicherten Laufzeitumgebung in Form von darin ablaufenden Programmen, sogenannten Trustlets oder ähnlich ausgebildet.

Ein Mobilfunkkommunikationsnetz im Sinn der Erfindung ist eine technische Einrichtung, auf der die Übertragung von Signalen unter Identifizierung und/ oder Authentisierung des Kommunikationsteilnehmers stattfindet, wonach technische Dienste angeboten werden. Das Mobilfunkkommunikationsnetz ist bevorzugt in Mobilfunkzellen aufgebaut. Insbesondere wird in dieser Erfindung beispielsweise das "Global System for Mobile Communications", kurz GSM als Vertreter der zweiten Generation oder das "General Packet Radio Service", kurz GPRS bzw. "Universal Mobile Telecommunications System", kurz UMTS als Vertreter der dritten Generation oder das "Long Term Evolution", kurz LTE, als Vertreter der vierten Generation als Mobilfunknetz verstanden. Prinzipiell sind auch alle Code Division Multiple Access basierten Funknetze, kurz CDMA-Netze, unter den Begriff des Mobilfunkkommunikationsnetzes zu fassen.

Ein Mobilfunksystem im Sinne der Erfindung umfasst wiederum zumindest ein Mobilfunkkommunikationsnetz, wobei das Mobilfunksystem bevorzugt eine Mehrzahl unterschiedlicher, insbesondere sich durch Authentisierung, Codierung, Frequenz, Zellgröße, Übertragungstechniken und Dienstangebot unterscheidender Mobilfunkkommunikationsnetze aufweist. Das Mobilfunksystem weist darüber hinaus noch weitere Systemkomponenten auf, die wiederum nicht Teil der Mobilfunkkommunikationsnetze sind, allerdings auf einzelne Komponenten jedes Mobilfunkkommunikationsnetzes zugreifen können.

Unter einem Dienst im Sinn der Erfindung ist insbesondere ein Sprachdienst oder ein Datendienst zu verstehen, mit dem Informationen und/ oder Daten über das Kommunikationsnetzwerk übertragen werden können.

Das erfindungsgemäße Verfahren beinhaltet die folgenden Verfahrensschritte: Aktivierung von inaktiven Teilnehmeridentitätsdaten im Sicherheitsmodul, wodurch eine bis zum Zeitpunkt des Aktivierens aktive Rufnummer der aktiven Teilnehmeridentitätsdaten deaktiviert wird und wodurch eine inaktive Rufnummer eine aktivierte Rufnummer wird. Das Verfahren umfasst weiterhin den Schritt: Bereitstellen der aktivierten Rufnummer einer Anzahl von vorbestimmten zweiten Teilnehmern. Der oder die vorbestimmten zweiten Teilnehmer sind dabei dem ersten Teilnehmer zugeordnet. Auf diese Weise wird sichergestellt, dass andere zweite Teilnehmer darüber informiert werden, unter welcher Rufnummer der erste Teilnehmer aktuell erreicht werden kann. Es wird demzufolge verhindert, dass bestimmte zweite Teilnehmer den ersten Teilnehmer unter einer inaktiven Rufnummer kontaktieren. Der obige Begriff der Bereitstellung der Rufnummer der aktivierten Teilnehmeridentitätsdaten ist dabei weit zu verstehen. Insbesondere muss die Rufnummer der aktivierten Teilnehmeridentitätsdaten nicht tatsächlich der Anzahl von vorbestimmten zweiten Teilnehmern übermittelt werden, sondern es ist bspw. ausreichend, dass ein zweiter Teilnehmer, der Zugriff auf alle Rufnummern des ersten Teilnehmers hat, in geeigneter Weise darüber informiert wird, welche Rufnummer aktiv ist. Es sei zusätzlich klargestellt, dass das Bereitstellen ein aktiver Schritt ist, also die zweiten Teilnehmer aktiv darüber informiert werden, dass eine Rufnummer des ersten Teilnehmers aktiviert wurde.

Als aktivierte Rufnummer wird die Rufnummer verstanden, die im Zuge der Aktivierung von Teilnehmeridentitätsdaten ihren Zustand von inaktiv auf aktiv gewechselt hat. Eine aktivierte Rufnummer war vor der Aktivierung der Teilnehmeridentitätsdaten inaktiv und ist nach der Aktivierung der Teilnehmeridentitätsdaten aktiv.

Als aktivierte Teilnehmeridentitätsdaten werden Teilnehmeridentitätsdaten verstanden, die im Zuge eines Kommunikationsnetzkommandos, insbesondere eines OTA-Kommandos von einem inaktiven Zustand in einen aktiven Zustand gewechselt worden sind. Die bis zu dem Zeitpunkt des Aktivierens aktiven Teilnehmeridentitätsdaten werden dadurch inaktiv, wodurch auch die entsprechende Rufnummer inaktiv wird. In der Folge ist der erste Teilnehmer für zweite Teilnehmer nicht mehr erreichbar.

In einer alternativen Ausgestaltung wird das Aktivieren von Teilnehmeridentitätsdaten direkt vom Endgerät oder durch den ersten Teilnehmer initiiert und endgeräteseitig eine Nachricht an das Kommunikationssystem übertragen, um den Wechsel der Teilnehmeridentitätsdaten dem Kommunikationsnetzwerk anzuzeigen.

In einer besonders bevorzugten Ausführungsform des erfindungsgemäßen Verfahrens ist die Anzahl von vorbestimmten zweiten Teilnehmern durch einen oder mehrere Benutzer und insbesondere einen für den Zugriff auf das Sicherheitsmodul autorisierten Benutzer konfigurierbar. Auf diese Weise kann ein Benutzer in geeigneter Weise den Teilnehmerkreis festlegen, für den gewährleistet werden soll, dass der Benutzer erreichbar ist. Der Teilnehmerkreis kann somit flexibel durch den entsprechenden Benutzer in Abhängigkeit von seinen Präferenzen definiert bzw. verändert werden.

In einer weiteren Ausgestaltung des erfindungsgemäßen Verfahrens wird die aktivierte Rufnummer der aktivierten Teilnehmeridentitätsdaten der Anzahl von vorbestimmten zweiten Teilnehmern über das Versenden einer Nachricht, insbesondere einer SMS und/ oder E-Mail, an den oder die vorbestimmten zweiten Teilnehmer bereitgestellt. Alternativ oder zusätzlich besteht jedoch auch die Möglichkeit, dass die aktivierte Rufnummer der aktivierten Teilnehmeridentitätsdaten der Anzahl von vorbestimmten zweiten Teilnehmern über einen Webservice und/oder ein soziales Netzwerk bereitgestellt wird. Auf dem Webservice bzw. das soziale Netzwerk haben dabei die vorbestimmten zweiten Teilnehmer Zugriff.

In einer weiteren Ausgestaltung des erfindungsgemäßen Verfahrens ist ein Teilnehmeridentitätsdatenserver als eine Systemkomponente des Mobilfunksystems vorgesehen, der die Teilnehmeridentitätsdaten von einem oder mehreren ersten Teilnehmern verwaltet und dabei über die Information verfügt, welche Teilnehmeridentitätsdaten des oder der ersten Teilnehmer aktiviert sind. Bei der Aktivierung der Teilnehmeridentitätsdaten eines jeweiligen ersten Teilnehmers wird die aktivierte Rufnummer der aktivierten Teilnehmeridentitätsdaten durch den Teilnehmeridentitätsdatenserver der entsprechenden Anzahl von vorbestimmten zweiten Teilnehmern bereitgestellt. Auf diese Weise kann in einem geschlossenen System mit einem zentralen Teilnehmeridentitätsdatenserver die aktive Rufnummer eines ersten Teilnehmers anderen zweiten Teilnehmern mitgeteilt werden. Unter dem obigen Begriff der "entsprechenden Anzahl von vorbestimmten zweiten Teilnehmern" ist hier und im Folgenden die Anzahl von vorbestimmten zweiten Teilnehmern zu verstehen, die dem jeweiligen ersten Teilnehmer zugeordnet sind.

In einer weiteren Ausgestaltung des erfindungsgemäßen Verfahrens sind in dem Mobilfunksystem mehrere erste Teilnehmer vorhanden, deren Teilnehmeridentitätsdaten über mehrere Teilnehmeridentitätsdatenserver verwaltet werden, wobei ein jeweiliger Teilnehmeridentitätsdatenserver für einen Teil der ersten Teilnehmer über die Information verfügt, welche Teilnehmeridentitätsdaten des oder der ersten Teilnehmer aktiviert sind. Dabei ist ein zentraler Informationsserver vorgesehen, der mit allen Teilnehmeridentitätsdatenservern kommunizieren kann und an der Bereitstellung der aktivierten Rufnummern der aktivierten Teilnehmeridentitätsdaten von ersten Teilnehmern für die entsprechende Anzahl von vorbestimmten zweiten Teilnehmern beteiligt ist.

Gemäß dieser Variante der Erfindung kann in einem offenen System, bei dem ein erster Teilnehmer Teilnehmeridentitätsdaten von verschiedenen Teilnehmeridentitätsdatenservern erhalten kann, die Bereitstellung der aktivierten Rufnummer der aktivierten Teilnehmeridentitätsdaten mittels eines zentralen Informationsservers erreicht werden. Der obige Begriff der Beteiligung an der Bereitstellung der aktivierten Rufnummern der aktivierten Teilnehmeridentitätsdaten ist dabei weit zu verstehen. Der Informationsserver kann aktiv an der Bereitstellung der Rufnummern, z.B. durch Aussenden bzw. Weiterleiten von Nachrichten, beteiligt sein. Ebenso kann er lediglich dafür vorgesehen sein, den Teilnehmeridentitätsdatenservern zentrale Anweisungen bezüglich der Verteilung von aktivierten Rufnummern von aktiven Teilnehmeridentitätsdaten zu geben.

In einer besonders bevorzugten Ausführungsform empfängt der zentrale Informationsserver von den Teilnehmeridentitätsdatenservern die aktivierten Rufnummern der aktivierten Teilnehmeridentitätsdaten und stellt diese aktivierten Rufnummern jeweils der entsprechenden Anzahl von vorbestimmten zweiten Teilnehmern bereit, z.B. durch das Versenden einer Nachricht und/ oder über einen Webservice oder und/ oder ein soziales Netzwerk.

In einer weiteren Variante des erfindungsgemäßen Verfahrens gibt der zentrale Informationsserver den Teilnehmeridentitätsdatenservern lediglich Steuerbefehle zur Bereitstellung der aktivierten Rufnummern von aktivierten Teilnehmeridentitätsdaten für die entsprechende Anzahl von vorbestimmten zweiten Teilnehmern, wobei die Teilnehmeridentitätsdatenserver die aktivierten Rufnummern der aktivierten Teilnehmeridentitätsdaten jeweils der entsprechenden Anzahl von vorbestimmten zweiten Teilnehmern bereitstellen. Die obigen Steuerbefehle können sich bspw. darauf beziehen, auf welche Weise die Rufnummer den zweiten Teilnehmern bereitgestellt werden soll, wobei insbesondere dahingehend unterschieden werden kann, ob zur Bereitstellung eine Nachricht versendet werden soll bzw. ein Webservice oder ein soziales Netzwerk genutzt werden soll.

In den oben beschriebenen Varianten der Erfindung, bei denen eine oder mehrere Teilnehmeridentitätsdatenserver beteiligt sind, informiert vorzugsweise das Sicherheitsmodul des ersten Teilnehmers den oder die Teilnehmeridentitätsdatenserver über die Aktivierung von Teilnehmeridentitätsdaten.

In einer weiteren Ausgestaltung des erfindungsgemäßen Verfahrens stellt das Sicherheitsmodul die aktivierte Rufnummer der aktivierten Teilnehmeridentitätsdaten der Anzahl von vorbestimmten zweiten Teilnehmern direkt, d.h. ohne Zwischenschaltung von Teilnehmeridentitätsdatenservern bzw. eines zentralen Informationsservers, bereit.

In einer weiteren Ausgestaltung des erfindungsgemäßen Verfahrens erfolgt bei Vorliegen von einer oder mehreren Bedingungen eine Rufnummernumleitung von der oder den inaktiven Rufnummern der Teilnehmeridentitätsdaten des ersten Teilnehmers zu der aktivierten Rufnummer der aktivierten Teilnehmeridentitätsdaten. Auf diese Weise kann sichergestellt werden, dass ein erster Teilnehmer durch einen zweiten Teilnehmer auch dann kontaktiert werden kann, wenn die Information über den Teilnehmeridentitätsdatenwechsel, die dem zweiten Teilnehmer bereitgestellt wird, durch einen entsprechenden Benutzer übersehen wird. Die Bedingungen zur Aktivierung einer Rufnummernumleitung können je nach Anwendungsfall verschieden ausgestaltet sein. Beispielsweise kann eine Rufnummernumleitung immer dann aktiviert werden, wenn festgestellt wird, dass sehr häufig Wechsel zwischen den Teilnehmeridentitätsdaten eines ersten Teilnehmers auftreten.

Die Erfindung betrifft darüber hinaus ein System zum Verarbeiten von Teilnehmeridentitätsdaten eines oder mehrerer Teilnehmer in einem zumindest ein Mobilfunkkommunikationsnetz aufweisenden Mobilfunksystem. Dabei ist ein jeweiliger Teilnehmer ein erster Teilnehmer, dem ein Sicherheitsmodul zugeordnet ist, das eine Kommunikation des ersten Teilnehmers mit zweiten Teilnehmern über ein dem Sicherheitsmodul zugewiesenes Mobilfunkendgerät ermöglicht, wobei in dem Sicherheitsmodul aktive Teilnehmeridentitätsdaten und inaktive Teilnehmeridentitätsdaten des ersten Teilnehmers mit einer jeweiligen Rufnummer hinterlegt sind, wobei nach der Aktivierung von inaktiven Teilnehmeridentitätsdaten zu aktivierten Teilnehmeridentitätsdaten die inaktive Rufnummer eine aktivierte Rufnummer ist und die Rufnummer oder Rufnummern der inaktiven Teilnehmeridentitätsdaten im Sicherheitsmodul inaktive Rufnummern sind.

Dieses System zeichnet sich dadurch aus, dass das System eine oder mehrere Einrichtungen aufweist, um bei der Aktivierung von Teilnehmeridentitätsdaten die aktivierte Rufnummer einer Anzahl von vorbestimmten zweiten Teilnehmern, die dem ersten Teilnehmer zugeordnet sind, bereitzustellen.

Ausführungsbeispiele der Erfindung werden nachfolgend anhand der beigefügten Figuren detailliert beschrieben.

Es zeigen:
- Fig. 1: eine schematische Darstellung einer ersten bevorzugten Ausführungsform der Erfindung; und
- Fig. 2: eine schematische Darstellung einer zweiten bevorzugten Ausführungsform der Erfindung.

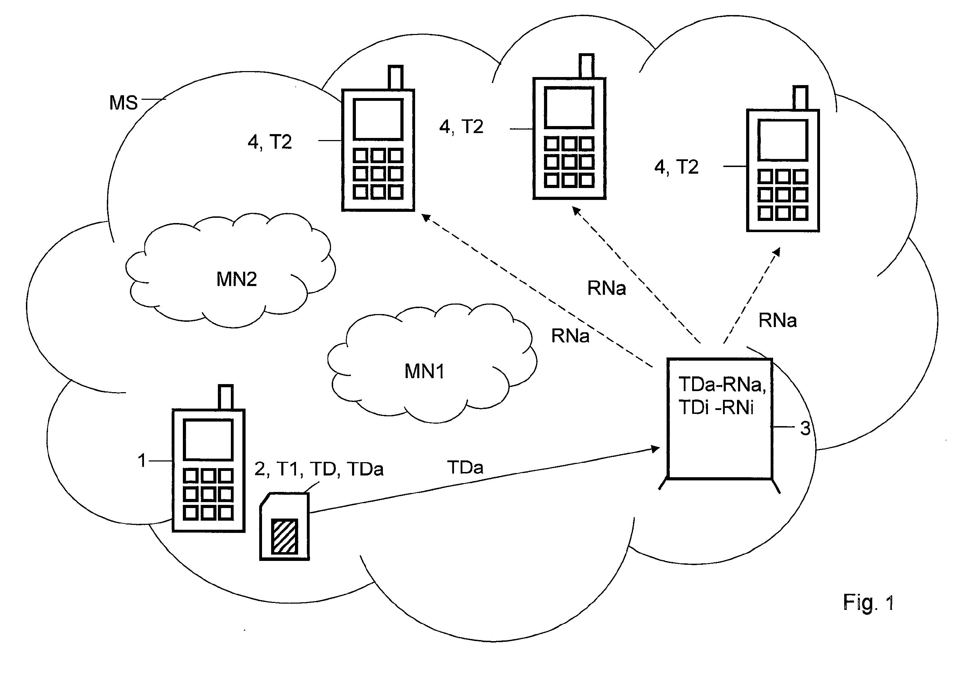

Eine bevorzugte Ausführungsform der Erfindung wird nachfolgend anhand eines Teilnehmers (englisch "Subscriber") eines Mobilfunknetzes MN in einem Mobilfunksystem MS beschrieben, dem ein Sicherheitsmodul 2 in der Form einer SIM bzw. UICC zugeordnet ist. Anstatt einer UICC kann ggf. auch eine eUICC verwendet werden. Fig.1 zeigt eine UICC 2 mit einer eindeutigen Identifikation eines ersten Teilnehmers T1. Dabei sind auf der SIM mehrere Teilnehmeridentitätsdaten TD (genauer mehrere Sätze von Teilnehmeridentitätsdaten TD) hinterlegt, die jeweils durch eine entsprechende Rufnummer RN in der Form einer MSISDN-Nummer spezifiziert sind, über die der erste Teilnehmer T1 bei Aktivierung der Rufnummer RN erreicht werden kann. Auf der UICC 2 kann immer nur ein Satz von Teilnehmeridentitätsdaten TD aktiv sein, wodurch nur eine der den Teilnehmeridentitätsdaten TD zugeordneten Rufnummern RN aktiv ist, unter der der erste Teilnehmer T1 für zweite Teilnehmer T2 erreichbar ist. In Fig. 1 sind aktuell aktivierte Teilnehmeridentitätsdaten mit TDa' und die entsprechende Rufnummer RN dieser aktivierten Teilnehmeridentitätsdaten TDa' mit RNa' bezeichnet.

Die UICC 2 ist in einem Mobilfunkendgerät 1 eingesetzt, über das der erste Teilnehmer in einem Mobilfunksystem kommunizieren kann, wobei das Mobilfunksystem aus mehreren Mobilfunknetzen MN1, MN2 bestehen kann. Üblicherweise erfolgt die Kommunikation über ein dem ersten Teilnehmer zugeordnetes Heimatnetz MN1 und ggf. weitere Netze MN2, sofern der erste Teilnehmer nicht im Heimatnetz MN1 lokalisiert ist bzw. mit Teilnehmern aus anderen Netzen MN2 kommuniziert.

In der Ausführungsform der Fig. 1 werden die Teilnehmeridentitätsdaten TD von ersten Teilnehmern in einem geschlossenen System über einen zentralen Teilnehmeridentitätsdatenserver 3 verwaltet, der sowohl die aktiven Teilnehmeridentitätsdaten TDa als auch die inaktiven Teilnehmeridentitätsdaten TDi von jeweiligen ersten Teilnehmern T1 auf deren UICC 2 geladen hat und verwaltet. Das Umschalten von aktiven Teilnehmeridentitätsdaten TDa zu bis zum Zeitpunkt der Umschaltung inaktiven Teilnehmeridentitätsdaten TDi erfolgt insbesondere über ein OTA Kommando von einer Systemkomponente des Mobilfunksystems MS oder einer Komponente des jeweiligen Mobilfunknetzes MN. Das Umschalten von aktiven Teilnehmeridentitätsdaten TDa zu bis zum Zeitpunkt der Umschaltung inaktiven Teilnehmeridentitätsdaten TDi kann auch lokal durch einen Benutzer über das Mobilfunkgeräts 1 durchgeführt werden oder durch eine an das Mobilfunkendgerät 1 angeschlossene Einheit erfolgen. Eine solche Umschaltung wird dem zentralen Teilnehmeridentitätsdatenserver 3 durch eine automatisierte Nachricht mitgeteilt, welche von der UICC 2 an den Server 3 übermittelt wird. Der Server 3 beinhaltet eine Zuorndung von Teilnehmeridentitätsdaten TD zu den jeweiligen Rufnummern RN. Die UICC 2 meldet dem Server 3 insbesondere die aktivierten Teilnehmeridentitätsdaten TDa'. Der Server 3 ist somit immer darüber informiert, welche Teilnehmeridentitätsdaten TDa in dem entsprechenden ersten Teilnehmer T1 gerade aktiv sind und kann anhand der Zuordnung von Teilnehmeridentitätsdaten TD zu der jeweiligen Rufnummer RN feststellen, welche Rufnummer RN nunmehr die aktivierte Rufnummer RNa' ist. Der Server 3 ist weiterhin immer darüber informiert, welche Teilnehmeridentitätsdaten TDi gerade inaktiv sind und somit informiert, welche Rufnummer RNi inaktiv ist.

Es besteht das Bedürfnis, dass ein erster Teilnehmer T1 bei dem Wechsel der Teilnehmeridentitätsdaten TD bestimmte zweite Teilnehmer T2, mit denen er häufig kommuniziert, über den Wechsel und damit die nun aktivierte Rufnummer RNa' informiert, so dass den zweiten Teilnehmern T2 bekannt ist, unter welcher Rufnummer RN der erste Teilnehmer T1 aktuell erreicht werden kann. Um dies zu ermöglichen, ist für jeden ersten Teilnehmer T1 ein vorbestimmter Teilnehmerkreis von zweiten Teilnehmern T2 festgelegt, der in dem Teilnehmeridentitätsdatenserver 3 hinterlegt ist. Vorzugsweise kann der Teilnehmerkreis dabei von definierten Benutzern konfigurierbar sein, um hohe Flexibilität zu gewährleisten. Beispielsweise kann ein Benutzer an dem Mobilfunkgerät 1 den entsprechenden Teilnehmerkreis festlegen und diese Information an den Teilnehmeridentitätsdatenserver 3 übermitteln. Nichtsdestotrotz kann der vorbestimmte Teilnehmerkreis ggf. auch vorab festgelegt sein, ohne dass er durch den Benutzer verändert werden kann.

In dem Szenario der Fig. 1 sind als zweite Teilnehmer T2 des für den ersten Teilnehmer T1 festgelegten Teilnehmerkreises drei Teilnehmer T2 mit zugeordneten Mobilfunkgeräten 4 gezeigt. Die zweiten Teilnehmer T2 sind wiederum Teilnehmer eines Mobilfunknetzes, denen ein entsprechendes Sicherheitsmodul 2 zugewiesen ist, welches in Fig.1 nicht separat gezeigt ist, jedoch in dem jeweiligen Mobilfunkgerät 4 eingesetzt ist. Der Kreis der zweiten Teilnehmer T2 ist jedoch nicht auf Teilnehmer eines ersten Mobilfunknetzes MN1 beschränkt, die Teilnehmer T2 können auch in einem zweiten Mobilfunknetz MN2 registriert/authentisiert sein. Gegebenenfalls können die zweiten Teilnehmer T2 auch auf andere Weise identifiziert werden, z.B. über eine E-Mail-Adresse oder Festnetznummer etc., an welche über das Mobilfunkgerät 1 auch Informationen übermittelt werden können.

Die UICC 2 des ersten Teilnehmers T1 und/oder der Server 3 überprüfen, ob ein Wechsel der Rufnummern RN beim Wechsel der Teilnehmeridentitäten TD stattgefunden hat und nur beim Wechsel der Rufnummern RN wird das erfindungsgemäße Verfahren aktiviert.

Um nunmehr die zweiten Teilnehmer T2 über den Wechsel der Teilnehmeridentitätsdaten TD und insbesondere eine neu aktivierte Rufnummer RNa' zu informieren, wird der Teilnehmeridentitätsdatenserver 3 verwendet. Dabei werden bei einem Wechsel der aktivierten Teilnehmeridentitätsdaten TDa' zunächst über eine automatisierte Nachricht der UICC 2 die aktivierten Teilnehmeridentitätsdaten TDa' dem Server 3 mitgeteilt. Dem Server 3 ist dabei der für den Teilnehmer T1 konfigurierte Teilnehmerkreis aus zweiten Teilnehmern T2 bekannt. Demzufolge sendet der Server 3 anschließend die aktivierte Rufnummern RNa' an die zweiten Teilnehmer T2 des vorbestimmten Teilnehmerkreises. In der Ausführungsform der Fig.1 werden die Rufnummern RN der aktivierten Teilnehmeridentitätsdaten TDa über SMS-Nachrichten bzw. E-Mail-Nachrichten an die definierten zweiten Teilnehmer T2 übermittelt. In einer Ausgestaltung der Erfindung werden die aktivierten Rufnummern RNa' vom Endgerät an den Server 3 übermittelt.

Ggf. kann die Information über die aktive Rufnummer RNa auch auf andere Weise den zweiten Teilnehmern T2 mitgeteilt werden, z.B. über einen Webservice, der die Information anzeigt. Ebenfalls kann die Information über soziale Netzwerke, wie z.B. Facebook, dem vorbestimmten Teilnehmerkreis mitgeteilt werden. Die Information über die aktivierte Rufnummer RNa' braucht somit ggf. nicht aktiv den zweiten Teilnehmern T2 zur Kenntnis gebracht werden. Vielmehr ist es auch ausreichend, wenn für die entsprechenden zweiten Teilnehmer T2 die Möglichkeit geschaffen wird, dass diese Zugriff auf die Rufnummer RNa' der aktivierten Teilnehmeridentitätsdaten TDa' haben. Weiterhin kann ausreichend sein, den zweiten Teilnehmern zu signalisieren, dass der Wechsel der Rufnummer RN stattgefunden hat und der Teilnehmer T1 unter der vorher aktiven Rufnummer RNa nicht mehr 'erreichbar ist.

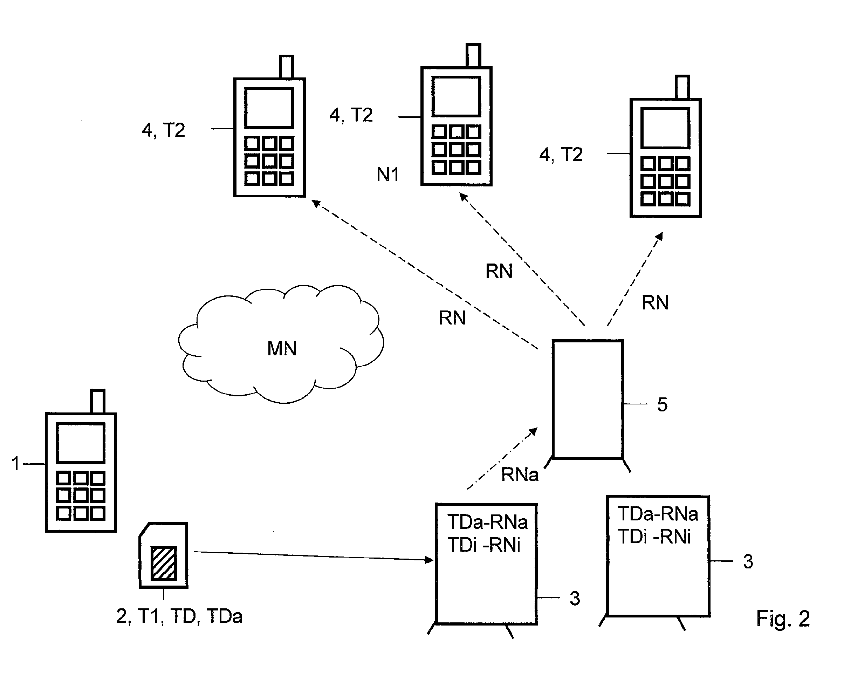

Fig. 2 zeigt eine zweite bevorzugte Ausführungsform der Erfindung, bei der ein offenes System zur Teilnehmeridentitätsdatenverwaltung verwendet wird. In einem solchen System sind mehrere Teilnehmeridentitätsdatenserver 3 vorgesehen, wobei in Fig. 2 zwei solcher Server 3 angedeutet sind. Jeder dieser Server 3 kann auf verschiedene Sicherheitsmodule 2 von entsprechenden ersten Teilnehmern T1 Teilnehmeridentitätsdaten TD laden. In Fig. 2 ist analog zu Fig.1 lediglich ein erster Teilnehmer T1 mit zugeordneter UICC 2 angedeutet, wobei auf der UICC mehrere Teilnehmeridentitätsdaten TD (genauer Sätze von Teilnehmeridentitätsdaten TD) hinterlegt sind, von denen ein Satz von Teilnehmeridentitätsdaten TDa mit zugeordneter MSISDN-Nummer RNa aktiv ist. Im Unterschied zu Fig. 1 können die Teilnehmeridentitätsdaten TD von verschiedenen Teilnehmeridentitätsdatenservern 3 auf die UICC 2 geladen sein. In Analogie zu Fig.1 ist ein vorbestimmter und ggf. konfigurierbarer Teilnehmerkreis für den ersten Teilnehmer T1 festgelegt, der durch die zweiten Teilnehmer T2 angedeutet ist. Die zweiten Teilnehmer T2 werden nunmehr jedoch nicht durch einen zentralen Teilnehmeridentitätsdatenserver 3 über einen Wechsel der Teilnehmeridentitätsdaten TD informiert. Hierfür wird ein zentraler Informationsservice in der Form eines Informationsservers 5 eingesetzt, der mit allen Teilnehmeridentitätsdatenservern 3 kommunizieren kann, wie dies im Folgenden beschrieben wird.

Werden auf der UICC 2 Teilnehmeridentitätsdaten TD gewechselt, werden die aktivierten Teilnehmeridentitätsdaten TDa demjenigen Teilnehmeridentitätsdatenserver 3 mitgeteilt, der diese Teilnehmeridentitätsdaten TD auf die UICC 2 geladen hat. Anschließend sendet der Server 3 eine Nachricht, welche die neue aktivierte Rufnummer RNa' spezifiziert, an den zentralen Informationsserver 5. In dem Informationsserver 5 ist dabei für jeden der ersten Teilnehmer T1 hinterlegt, an welchem vorbestimmten Teilnehmerkreis ein Teilnehmeridentitätsdatenwechsel mit der neuen Rufnummer RN mitgeteilt werden soll. Nach Empfang der Rufnummer RNa' ordnet der Informationsserver die Rufnummer RN dem entsprechenden ersten Teilnehmer T1 zu und identifiziert anschließend den vorbestimmten Teilnehmerkreis für diesen Teilnehmer T1. Schließlich werden entsprechende Nachrichten mit der aktivierten Rufnummer RNa' an die zweiten Teilnehmer T2 des vorbestimmten Teilnehmerkreises gesendet.

In einer Abwandlung der Ausführungsform der Fig. 2 kann bei einem Teilnehmeridentitätsdatenwechsel die aktivierte Rufnummern RNa' auch direkt durch den beteiligten Teilnehmeridentitätsdatenserver 3 (d.h. den Teilnehmeridentitätsdatenserver 3, der die aktivierte Teilnehmeridentitätsdaten TD verwaltet) an die entsprechenden zweiten Teilnehmer T2 übermittelt werden. In diesem Fall übernimmt der Informationsserver 5 lediglich Steueraufgaben. Insbesondere kann er die einzelnen Teilnehmeridentitätsdatenserver 3 instruieren, auf welche Weise die aktivierte Rufnummer RNa' bereitgestellt bzw. verteilt werden soll. Zur Verteilung der Rufnummer RN können dabei wiederum die oben beschriebenen Varianten, nämlich das Versenden einer Nachricht, ein Web-Server oder ein soziales Netzwerk, zum Einsatz kommen.

In einer weiteren Ausgestaltung des erfindungsgemäßen Verfahrens kann die aktivierte Rufnummer RNa' der aktivierten Teilnehmeridentitätsdaten TDa' bei einem Teilnehmeridentitätsdatenwechsel ggf. auch ohne Beteiligung von Teilnehmeridentitätsdatenservern 3 bzw. einem Informationsserver 5 den zweiten Teilnehmern T2 bereitgestellt werden. In diesem Fall wird automatisiert bei einem Wechsel der Teilnehmeridentitätsdaten TD eine Nachricht mit der aktivierten Rufnummer RNa' und/oder der aktivierten Teilnehmeridentitätsdaten TDa' direkt von der UICC 2 des ersten Teilnehmers T1 an die zweiten Teilnehmer T2 des vorbestimmten Teilnehmerkreises versendet. Hierzu kann insbesondere eine Applet auf der UICC 2 zum Einsatz kommen.

In einer weiteren Ausführungsform des erfindungsgemäßen Verfahrens besteht ggf. auch die Möglichkeit, dass neben der Bereitstellung der Rufnummer RN von aktivierten Teilnehmeridentitätsdaten TDa' für einen vorbestimmten Teilnehmerkreis auch eine Rufnummernumleitung von den inaktiven Rufnummern RNi der inaktiven Teilnehmeridentitätsdaten TDi der UICC 2 zu der aktivierten Rufnummer RNa' der aktivierten Teilnehmeridentitätsdaten TDa' durchgeführt wird. Die Aktivierung der Rufnummernumleitung kann dabei je nach Anwendungsfall an verschiedene Kriterien geknüpft sein. Zum Beispiel kann eine solche Rufnummernumleitung immer dann verwendet werden, wenn über einen längeren Zeitraum mehrere, öfter wechselnde Teilnehmeridentitätsdaten TD (z.B. Privat- und Firmenteilnehmeridentitätsdaten) von der UICC 2 benutzt werden. Auf diese Weise wird sichergestellt, dass auch dann, wenn ein Benutzer übersieht, dass die Rufnummer RN des ersten Teilnehmers T1 gewechselt hat, ein Anruf des Benutzers an den ersten Teilnehmer T1 gelangt.

Zur Implementierung der Rufnummernumleitung kann z.B. der in Fig. 1 gezeigte zentrale Teilnehmeridentitätsdatenserver 3 bzw. der Informationsserver 5 der Fig. 2 verwendet werden. Diese senden im Falle einer Rufnummernumleitung automatisiert eine Nachricht mit der Rufnummernumleitung an den Mobilfunkbetreiber der Teilnehmeridentitätsdaten TD, welche bei einem Teilnehmeridentitätsdatenwechsel deaktiviert werden. Zur Automatisierung können weitere Regeln definiert sein, ob und wann eine Rufnummer umgeleitet werden soll, z.B. nur national. Die Deaktivierung einer entsprechenden Rufnummernumleitung kann in gleicher Weise automatisiert durchgeführt werden und an bestimmte Kriterien bzw. Regeln gekoppelt sein. Zur Aufhebung einer Rufnummernumleitung kann wiederum der in Fig. 1 gezeigte zentrale Teilnehmeridentitätsdatenserver 3 oder der Informationsserver 5 der Fig. 2 eingesetzt werden.

Die im Vorangegangenen beschriebenen Ausführungsformen des erfindungsgemäßen Verfahrens weisen eine Reihe von Vorteilen auf. Insbesondere wird auf einfache Weise eine Verwaltung von mehreren Teilnehmeridentitätsdaten TD auf einem Sicherheitsmodul 2 geschaffen, wobei bei einem Wechsel der aktiven Teilnehmeridentitätsdaten TDa ein vorbestimmter Teilnehmerkreis über die aktivierte Rufnummer RNa' der aktivierten Teilnehmeridentitätsdaten TDa' informiert wird. Der Teilnehmerkreis ist dabei vorzugsweise über einen oder mehrere Benutzer konfigurierbar und kann somit an die Bedürfnisse eines Benutzers angepasst werden.

### Bezugszeichenliste

- 1: Mobilfunkendgerät
- 2: Sicherheitsmodul, SIM, eUICC
- 3: Teilnehmeridentitätsdatenserver
- 4: Mobilfunkendgerät
- 5: Zentraler Informationsserver
- T1: erster Teilnehmer
- T2: zweite Teilnehmer
- TD: Teilnehmeridentitätsdaten
- TDi: inaktive Teilnehmeridentitätsdaten
- TDa: aktive Teilnehmeridentitätsdaten
- TDa': aktivierte Teilnehmeridentitätsdaten
- RN: Rufnummer
- RNa: aktive Rufnummer
- RNa': aktivierte Rufnummer
- RNi: inaktive Rufnummer
- MN: Mobilfunkkommunikationsnetz
- MS: Mobilfunksystem

## Patentansprüche

1. Verfahren zum Betreiben eines Sicherheitsmoduls (2) in einem Mobilfunksystem (MS), aufweisend mindestens ein Mobilfunkkommunikationsnetz (MN), wobei das Sicherheitsmodul (2) aktive Teilnehmeridentitätsdaten (TDa) und inaktive Teilnehmeridentitätsdaten (TDi) aufweist, wobei eine Kommunikation eines ersten Teilnehmers (T1) mit zweiten Teilnehmern (T2) über ein durch das Sicherheitsmodul (2) für die Kommunikation am Mobilfunkkommunikationsnetz (MN) betriebsfähiges Mobilfunkendgerät (1) unter Verwendung der aktiven Teilnehmeridentitätsdaten (TDa) ermöglicht wird;
mit den Verfahrensschritten:
- Aktivieren von inaktiven Teilnehmeridentitätsdaten (TDi) im Sicherheitsmodul (2), wodurch eine bis zum Zeitpunkt des Aktivierens aktive Rufnummer (RNa) der aktiven Teilnehmeridentitätsdaten (TDa) deaktiviert wird und wodurch eine inaktive Rufnummer (RNi) eine aktivierte Rufnummer (RNa') wird; und
- Bereitstellen der aktivierten Rufnummer (RNa') einer Anzahl von vorbestimmten zweiten Teilnehmern (T2).

2. Verfahren nach Anspruch 1, **dadurch gekennzeichnet, dass** die Anzahl von vorbestimmten zweiten Teilnehmern (T2) durch einen oder mehrere Benutzer und insbesondere einen für den Zugriff auf das Sicherheitsmodul (2) autorisierten Benutzer konfigurierbar ist.

3. Verfahren nach Anspruch 1 oder 2, **dadurch gekennzeichnet, dass** der Schritt des Bereitstellens beinhaltet, dass die aktivierte Rufnummer (RNa') der aktivierten Teilnehmeridentitätsdaten (TDa') der Anzahl von vorbestimmten zweiten Teilnehmern (T2) über das Versenden einer Nachricht, insbesondere einer SMS und/oder E-Mail, an den oder die vorbestimmten zweiten Teilnehmer (T2) bereitgestellt wird.

4. Verfahren nach einem der vorhergehende Ansprüche, **dadurch gekennzeichnet, dass** der Schritt des Bereitstellens weiter beinhaltet, dass die aktivierte Rufnummer (RNa') der aktivierten Teilnehmeridentitätsdaten (TDa') der Anzahl von vorbestimmten zweiten Teilnehmern (T2) über einen Webservice und/oder ein soziales Netzwerk bereitgestellt wird, auf welche die Anzahl von vorbestimmten zweiten Teilnehmern (T2) Zugriff haben.

5. Verfahren nach einem der vorhergehenden Ansprüche, **dadurch gekennzeichnet, dass** in dem Mobilfunksystem (MS) ein Teilnehmeridentitätsdatenserver (3) vorgesehen ist, der die aktiven Teilnehmeridentitätsdaten (TDa) und inaktiven Teilnehmeridentitätsdaten (TDi) von einem oder mehreren ersten Teilnehmern (T1) verwaltet und dabei über die Information verfügt, welche Teilnehmeridentitätsdaten (TD) des oder der ersten Teilnehmer (T1) aktive Teilnehmeridentitätsdaten (TDa) sind, wobei durch den Schritt des Aktivierens von inaktiven Teilnehmeridentitätsdaten (TDi) zu aktivierten Teilnehmeridentitätsdaten (TDa') eines jeweiligen ersten Teilnehmers (T1) die aktivierte Rufnummer (RNa') durch den Teilnehmeridentitätsdatenserver (3) der entsprechenden Anzahl von vorbestimmten zweiten Teilnehmern (T2) bereitgestellt wird.

6. Verfahren nach einem der vorhergehenden Ansprüche, **dadurch gekennzeichnet, dass** in dem Mobilfunksystem (MS) mehrere erste Teilnehmer (T1) vorhanden sind, deren aktive Teilnehmeridentitätsdaten (TDa) und inaktive Teilnehmeridentitätsdaten (TDi) über mehrere Teilnehmeridentitätsdatenserver (3) verwaltet werden, wobei ein jeweiliger Teilnehmeridentitätsdatenserver (3) für einen Teil der ersten Teilnehmer (T1) über die Information verfügt, welche Teilnehmeridentitätsdaten (TD) des oder der ersten Teilnehmer (T1) aktivierte Teilnehmeridentitätsdaten (TDa') sind, wobei ein zentraler Informationsserver (5) vorgesehen ist, der mit allen Teilnehmeridentitätsdatenservern (3) kommunizieren kann und an der Bereitstellung der aktivierten Rufnummern (RNa') von ersten Teilnehmern (T1) für die entsprechende Anzahl von vorbestimmten zweiten Teilnehmern (T2) beteiligt ist.

7. Verfahren nach Anspruch 6, **dadurch gekennzeichnet, dass** der zentrale Informationsserver (5) von den Teilnehmeridentitätsdatenservern (3) die aktivierten Rufnummern (RNa') nach dem Aktivieren der inaktiven Teilnehmeridentitätsdaten (TDi) empfängt, wobei der zentrale Informationsserver (5) anschließend aktivierten Rufnummern (RNa') jeweils der entsprechenden Anzahl von vorbestimmten zweiten Teilnehmern (T2) bereitstellt.

8. Verfahren nach Anspruch 6 oder 7, **dadurch gekennzeichnet, dass** der zentrale Informationsserver (5) den Teilnehmeridentitätsdatenservern Steuerbefehle zur Bereitstellung der aktivierten Rufnummern (RNa') für die entsprechende Anzahl von vorbestimmten zweiten Teilnehmern (T2) gibt, wobei die Teilnehmeridentitätsdatenserver (3) die aktivierten Rufnummern (RNa') jeweils der entsprechenden Anzahl von vorbestimmten zweiten Teilnehmern (T2) bereitstellen.

9. Verfahren nach einem der Ansprüche 5 bis 8, **dadurch gekennzeichnet, dass** das Sicherheitsmodul (2) des ersten Teilnehmers (T1) den oder die Teilnehmeridentitätsdatenserver (3) über die Aktivierung von inaktiven Teilnehmeridentitätsdaten (TDi) informiert.

10. Verfahren nach einem der vorhergehenden Ansprüche, **dadurch gekennzeichnet, dass** das Sicherheitsmodul (2) die aktivierte Rufnummer (RNa') der aktivierten Teilnehmeridentitätsdaten (TDa') der Anzahl von vorbestimmten zweiten Teilnehmern (T2) direkt bereitstellt.

11. Verfahren nach einem der vorhergehende Ansprüche, **dadurch gekennzeichnet, dass** bei Vorliegen von einer oder mehrere Bedingungen eine Rufnummernumleitung von der oder den inaktiven Rufnummern (RNi) der Teilnehmeridentitätsdaten (TD) des ersten Teilnehmers (T1) zu der aktivierten Rufnummer (RNa') der aktivierten Teilnehmeridentitätsdaten (RNa') erfolgt.

12. Verfahren nach einem der vorhergehenden Ansprüche, **dadurch gekennzeichnet, dass** das Sicherheitsmodul (2) ein in dem Mobilfunkendgerät (1) eingesetzter und austauschbarer Datenträger, insbesondere eine UICC ist.

13. Verfahren nach einem der vorhergehenden Ansprüche, **dadurch gekennzeichnet, dass** das Sicherheitsmodul (2) ein in dem Mobilfunkendgerät (1) fest integriertes Modul, insbesondere eine eUICC ist.

14. System zum Verarbeiten von Teilnehmeridentitätsdaten (TD) eines oder mehrerer Teilnehmer in einem zumindest ein Mobilfunkkommunikationsnetz (MN) aufweisenden Mobilfunksystem (MS), wobei ein jeweiliger Teilnehmer ein erster Teilnehmer (T1) ist, dem ein Sicherheitsmodul (2) zugeordnet ist, das eine Kommunikation des ersten Teilnehmers (T1) mit zweiten Teilnehmern (T2) über ein dem Sicherheitsmodul (2) zugewiesenes Mobilfunkendgerät (1) ermöglicht, wobei in dem Sicherheitsmodul (2) aktive Teilnehmeridentitätsdaten (TDa) und inaktive Teilnehmeridentitätsdaten (TDi) des ersten Teilnehmers (T1) hinterlegt sind und jedem Satz von Teilnehmeridentitätsdaten (TDi) eine Rufnummer (RN) zugeordnet ist, wobei nach der Aktivierung von inaktiven Teilnehmeridentitätsdaten (TDi) zu aktivierten Teilnehmeridentitätsdaten (TDa') die inaktive Rufnummer (RNi) eine aktivierte Rufnummer (RNa') ist und die Rufnummer (RN) oder Rufnummern (RN) der inaktiven Teilnehmeridentitätsdaten (TDi) inaktive Rufnummern (RNi) sind,
**dadurch gekennzeichnet, dass**
das System eine oder mehrere Einrichtungen aufweist, um bei der Aktivierung von Teilnehmeridentitätsdaten (TD) die aktivierte Rufnummer (RNa') einer Anzahl von vorbestimmten zweiten Teilnehmern (T2), die dem ersten Teilnehmer (T1) zugeordnet sind, bereitzustellen.

15. System nach Anspruch 14, **dadurch gekennzeichnet, dass** die Einrichtung oder Einrichtungen zur Durchführung eines Verfahrens nach einem der Ansprüche 2 bis 13 ausgestaltet sind.
